# EUROPÄISCHE PATENTSCHRIFT

(11) **EP 0 405 203 B1**
(45) Veröffentlichungstag und Bekanntmachung des Hinweises auf die Patenterteilung: **05.10.1994**
(21) Anmeldenummer: 90110864.7
(22) Anmeldetag: 08.06.1990
(51) Int. Cl.: C01B 31/22

(54) **Verfahren zur Herstellung von Kohlendioxid-Granulat**
Method for the production of carbon dioxide granules
Procédé de fabrication de granulés de dioxyde de carbone

(30) Priorität: 27.06.1989 DE 3921054
(43) Veröffentlichungstag der Anmeldung: 02.01.1991
(73) Patentinhaber: Linde Aktiengesellschaft, 65189 Wiesbaden (DE)
(72) Erfinder: Rebhan, Dieter, Dipl.-Ing.-grad., D-8192 Geretsried-Gelting (DE)
(74) Vertreter: Schaefer, Gerhard, Dr.

(56) Entgegenhaltungen:
- FR-A- 805 535
- FR-A- 2 078 442
- CHEMICAL ABSTRACTS, Band 92, Nr. 12, 24. März 1980, Seite 118, ZusammenfassungNr. 96303z, Columbus, Ohio, US; & JP-A-79 112 795 (JAPAN OXYGEN CO., LTD) 03-09-1979
- Encyclopedia of Chemical Technology, Kirk-Othmer (3. Auflage) Band 4, S 737 (Wiley, New York)

## Beschreibung

Die Erfindung betrifft ein Verfahren zur Herstellung von CO₂-Granulat, bei dem Kohlendioxidschnee durch Verpressen in einen massiven Zustand übergeführt und gegebenenfalls anschließend auf eine gewünschte Feinheit zerkleinert wird.

Es sind eine Vielzahl von Anwendungen für CO₂-Granulat bekannt, beispielsweise die Anwendung als Strahlmittel zum Entgraten und Entlacken, die Anwendung als leicht handhabbares Kühlmittel usw.. Die Herstellung von massivem, hartem Kohlendioxid erfolgt über das Verpressen von Kohlendioxidschnee. Beim Verpressen dieses Schnees, beispielsweise durch Walz- oder Preßkolbeneinrichtungen, treten jedoch beträchtliche Verluste an Kohlendioxidschnee auf, da Kohlendioxid bekanntermaßen bei Umgebungstemperatur und Normaldruck den gasförmigen Zustand annimmt und deshalb CO₂-Schnee bereits bei diesen Bedingungen sublimiert. Besonders hohe Verluste an CO₂-Schnee treten aufgrund dessen insbesondere beim Verpressungsvorgang selbst auf. Insgesamt ergibt sich durch diese Vorgänge eine Verringerung der Menge an erwünschtem Produkt, nämlich festem CO₂-Granulat, die nachteilig und unerwünscht ist.

Die Schrift FR-2 078 442 schildert eine Vorrichtung zur Erzeugung von Trockenschnee und -eis. Flüssiges Kohlendioxid wird in einen Behälter gedüst, in dem sich durch Entspannen des Kohlendioxids Trockenschnee bildet. Das dabei entstehende gasförmige Kohlendioxid wird aus dem Behälter gesaugt und durch Serpentinen, die den Behälter umgeben, geführt, um den Behälter vorzukühlen. Mit dieser aufwendigen Vorrichtung kann lediglich die Sublimation des Trockenschnees geringfügig verlangsamt werden.

In der "Encyclopedia of Chemical Technology", Kirk-Othmer (3.Auflage, Vol.4, S.737), wird bei der Herstellung von Trockenschnee ebenfalls das bei der Entspannung von flüssigem Kohlendioxid enstehende gasförmige Kohlendioxid abgezogen und zur Kühlung des flüssigen CO₂ durch Wärmetausch verwendet. Die Sublimation des entstandenen Trockenschnees wird dadurch nicht beeinflußt.

Die Aufgabenstellung der vorliegenden Erfindung bestand deshalb darin, die Menge CO₂-Granulats bei den zugehörigen Produktionsverfahren mit vertretbarem Aufwand zu erhöhen.

Diese Aufgabe wird erfindungsgemäß dadurch gelöst, daß der Kohlendioxidschnee vor dem Verpressen mit Hilfe eines verflüssigten Gases als Kryomedium auf eine Temperatur unterhalb der Sublimationstemperatur des Kohlendioxids unterkühlt wird.

Die Unterkühlung des Kohlendioxidschnees, d.h. die Absenkung seiner Temperatur auf Temperaturen unterhalb der Sublimationstemperatur des CO₂ (-78,5 °C), führt dazu, daß vor, insbesondere während und auch nach dem Verpressungsvorgang eine wesentlich geringere Menge an Kohlendioxid in den gasförmigen Zustand übergeht. Derartige Temperaturen können mit Vorteil mit Kryomedien, also Medien, die bereits bei tiefkalten Temperaturen sieden, wie verflüssigte Gase, erzeugt und eingehalten werden.

In einer besonders vorteilhaften Ausgestaltung wird der Kohlendioxidschnee bei der Zufuhr zum Verpressen durch direktes Beaufschlagen mit dem Kryomedium gekühlt. Dies kann beispielsweise durch Besprühen mit oder Eintauchen in das jeweils angewandte Kryomedium erfolgen, wobei beispielsweise Kühlschnecken Anwendung finden können. Daraus ergibt sich eine Abkühlung des zu verpressenden Kohlendioxidschnees kurz vor der Phase des Produktionsablaufs, in der die größten Verluste auftreten, nämlich dem Verpreßvorgang. Durch geeignete Dosierung des Kryomediums und/oder geeignete Einwirkdauer wird dabei eine gewünschte Abkühlung des Kohlendioxidschnees erreicht. Darüber hinaus kann so auf indirekte Weise gleichzeitig eine Kühlung der Preßwerkzeuge durch noch nicht vollständig verdampftes Kryomedium und den abgekühlten Kohlendioxidschnee erzielt werden. Neben der direkten Beaufschlagung des CO₂-Schnees mit Kryomedium sind prinzipiell auch Kühlmethoden mit indirektem Wärmetausch zwischen dem Kohlendioxidschnee und dem Kälte liefernden Kryomedium denkbar.

Dies gilt insbesondere auch für die Ausgestaltung des erfindungsgemäßen Verfahrens, bei der der CO₂-Schnee bereits im Vorratsbehälter mit Hilfe eines Kryomediums unterkühlt wird. Diese Variante ist in aller Regel besonders einfach einzurichten und kann als alleinige oder mit eben beschriebener Kühlmaßnahme kombiniert betrieben werden.

In einer weiteren vorteilhaften Ausgestaltung des erfindungsgemäßen Verfahrens wird eine gesonderte Kühlung der Preßwerkzeuge vorzugsweise ebenfalls mit dem vorhandenen Kryomedium vorgesehen.

Besonders geeignet zur Durchführung des erfindungsgemäßen Verfahrens sind die Kryomedien Flüssigstickstoff und Flüssigargon.

Im folgenden soll anhand der schematischen Zeichnungen das erfindungsgemäße Verfahren beispielhaft näher erläutert werden. Es zeigen:

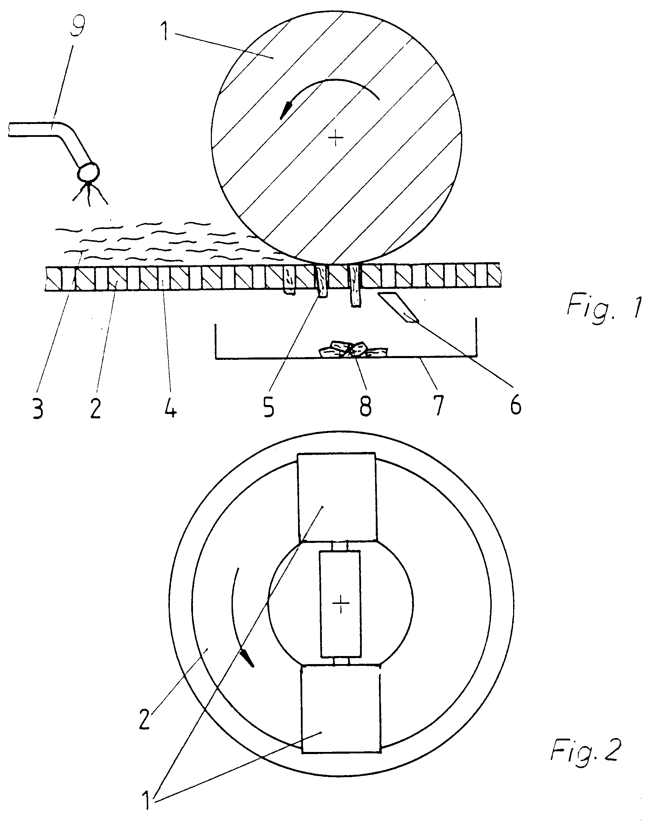

- Figur 1: Prinzipdarstellung einer Preßeinrichtung zur Durchführung des erfindungsgemäßen Verfahrens im Schnitt,
- Figur 2: eine verkleinerte, vereinfachte Draufsicht der in Figur 1 gezeigten Preßeinrichtung.

Die in den Figuren dargestellte Vorrichtung stellt schematisch eine sogenannte Flachmatrizenpresse dar. Diese besteht im wesentlichen aus einer oder mehreren Preßwalzen 1 und einer darunter angeordneten Matrize 2. Durch die Matrize 2 wird das zu verpressende Material 3 von der Preßwalze 1 hindurchgedrückt. Es entstehen so zunächst, je nach Querschnittsform der in der Matrize angeordneten Löcher 4, rundliche oder eckige Stäbchen 5 des gepreßten Materials,
die auf der der Preßwalze 1 gegenüberliegenden Seite der Matrize 2 überstehen. Kurz nach dem Hindurchpressen wird das überstehende Ende der gepreßten Stäbchen 5 mit einer Schneidevorrichtung 6 abgeschnitten und in einem Sammelbehälter 7 aufgefangen. Je nach Zielsetzung stellen die so erhaltenen Körner 8 bereits das Endprodukt dar oder können in einem weiteren Schritt nochmals zerkleinert werden. Dies kann beispielsweise in einer Mahleinrichtung erfolgen, in der das Mahlgut mit einem Kryomedium gekühlt wird.

Das erfindungsgemäße Vorgehen besteht nun darin, daß der zu verarbeitende Kohlendioxidschnee 3 mit Hilfe einer über der Matrize 2 bezüglich der Förderrichtung vor der Preßwalze 1 angeordneten Sprüheinrichtung 9 mit Flüssigstickstoff beaufschlagt wird. Der Kohlendioxidschnee wird so unterkühlt und eine Sublimation während des gesamten Ablaufs weitgehend verhindert. Dabei ist die Stickstoffmenge so zu regeln, daß der Kohlendioxidschnee etwa 5 bis 30° unter seine Sublimationstemperatur (-78,5 °C) abgekühlt wird. Die Stickstoffmenge kann darüberhinaus so groß gewählt sein, daß Teile des aufgebrachten Flüssiggases erst beim Preßvorgang selbst verdampfen und so auch in dieser Phase eine Kühlwirkung vorhanden ist.

Befindet sich die in den Figuren gezeigte Preßeinrichtung mit Preßwalzen 1 und Matrize 2 in einem Gehäuse, was ohnehin häufig auch bei anderen Preßeinrichtungen der Fall ist, so wird durch die Stickstoffeinsprühung automatisch und gleichzeitig auch eine Abkühlung des gesamten Gehäuseinnenraumes und insbesondere auch der Preßwerkzeuge erreicht. Dieser Effekt schafft eine weitere Verbesserung der Effizienz der CO₂-Granulat-Erzeugung. Durch weitere Maßnahmen, z.B. eine gesonderte, spezielle Kühlung der Preßwerkzeuge, kann der Produktionsablauf noch weiter optimiert werden. Beispielsweise kann dies durch dosiertes Besprühen der Werkzeuge mit Flüssigstickstoff erfolgen, z.B. durch Besprühen der der Matrize abgewandten Oberfläche der Preßrolle oder durch Besprühen der Matrize selbst vor dem Aufbringen des zu verpressenden Kohlendioxidschnees. Ziel dabei ist, daß die Werkzeuge im laufenden Betrieb zumindest eine Temperatur einnehmen, die nicht wesentlich über der Sublimationstemperatur von Kohlendioxid liegt. Bei Produktionsbeginn empfiehlt sich darüberhinaus eine zeitweise vermehrte Stickstoffzufuhr zur schnellen Abkühlung der Anlage.

Abschließend sei nochmals festgestellt, daß mit dem erfindungsgemäßen Verfahren und seinen Weiterbildungen die Ausbeute von festem, massivem CO₂-Korngut bei dessen Produktion aus Kohlendioxidschnees deutlich erhöht wird und so insgesamt auch die Wirtschaftlichkeit des Gesamtverfahrens gewahrleistet wird.

## Patentansprüche

1. Verfahren zur Herstellung von CO₂-Granulat, bei dem Kohlendioxidschnee durch Verpressen in einen massiven Zustand übergeführt und gegebenenfalls anschließend auf eine gewünschte Feinheit zerkleinert wird, **dadurch gekennzeichnet**, daß der Kohlendioxidschnee (3) vor dem Verpressen mit Hilfe eines verflüssigten Gases als Kryomedium auf eine Temperatur unterhalb der Sublimationstemperatur des Kohlendioxids unterkühlt wird.

2. Verfahren nach Anspruch 1, dadurch gekennzeichnet, daß der Kohlendioxidschnee (3) bei der Zufuhr zum Verpressen durch Beaufschlagen mit dem Kryomedium unterkühlt wird.

3. Verfahren nach einem der Ansprüche 1 oder 2, dadurch gekennzeichnet, daß der Kohlendioxidschnee (3) bereits im Vorratsbehälter durch Beaufschlagen mit dem Kryomedium unterkühlt wird.

4. Verfahren nach einem der Ansprüche 1 bis 3, dadurch gekennzeichnet, daß die das Verpressen bewirkenden Werkzeuge (1, 2) ebenfalls gesondert gekühlt werden.

5. Verfahren nach einem der Ansprüche 1 bis 4, dadurch gekennzeichnet, daß als Kryomedium Flüssigstickstoff oder Flüssigargon angewendet werden.

## Claims

1. Process for the manufacture of CO₂ granulate in which carbon dioxide snow is compacted into a solid state and if necessary then broken down to a desired fineness, characterised in that, before being compacted, the carbon dioxide snow (3) is supercooled to a temperature below the sublimation temperature of the carbon dioxide with the aid of a liquefied gas as cryo medium.

2. Process according to claim 1, characterised in that the carbon dioxide snow (3) is supercooled by exposure to the cryo medium while being fed for compacting.

3. Process according to one of claims 1 or 2, characterised in that the carbon dioxide snow (3) is already supercooled in the supply container by exposure to the cryo medium.

4. Process according to one of claims 1 to 3, characterised in that the tools (1, 2) effecting the compacting are also cooled separately.

5. Process according to one of claims 1 to 4, characterised in that liquid nitrogen or liquid argon is used as cryo medium.

## Revendications

1. Procédé d'obtention d'un granulat de CO₂ dans lequel de la neige carbonique est amenée par compaction à former une masse et en ce que cette masse est ensuite amenée à la finesse souhaitée, ce procédé étant caractérisé en ce que la neige carbonique (3), avant sa compaction, est sous-refroidie par l'intermédiaire d'un gaz liquéfié agissant en tant qu'agent cryogène, à une température inférieure à la température de sublimation du dioxyde de carbone.

2. Procédé selon la revendication 1, caractérisé en ce que la neige carbonique (3) est sous-refroidie par action de l'agent cryogène lors de l'acheminement de la neige carbonique vers la zone de compaction.

3. Procédé selon la revendication 1 ou 2, caractérisé en ce que la neige carbonique (3) est déjà sous-refroidie dans le récipient de stockage de ladite neige carbonique par action de l'agent cryogène.

4. Procédé selon une des revendications 1 à 3, caractérisé en ce que les moyens permettant la compaction (1, 2) sont de même refroidis séparément.

5. Procédé selon l'une des revendications 1 à 4, caractérisé en ce que l'agent cryogène est de l'azote liquide ou de l'argon liquide.
